# EUROPEAN PATENT APPLICATION

(11) **EP 1 605 213 A2**
(43) Date of publication of application: **14.12.2005**
(21) Application number: 05105156.3
(22) Date of filing: 13.06.2005
(51) Int. Cl.: F25B 29/00

(54) **Arrangement and method in connection with a heat pump process**

(30) Priority: 11.06.2004 FI 20045219
(71) Applicant: Greeneko Oy, 02270 Espoo (FI)
(72) Inventor: Lenander, Bror, 02880, Veikkola (FI)
(74) Representative: LEITZINGER OY

(57) **Abstract**

The present invention relates to an arrangement for upgrading heat recovery and equalizing thermal effect in connection with a heat pump process, comprising a heat pump (9), at least one heat exchanger (2) set in communication with a heat source (1) for recovering heat, a heat carrier circuit (20) provided between the heat exchanger (2) and the heat pump (9). The heat carrier circuit (20) is further provided with at least one buffer accumulator (4) for storing thermal energy, said buffer accumulator (4) being engaged with the heat carrier circuit (20) for connecting an outgoing line (10) extended from the heat exchanger (2) to the heat pump (9) and a return line (11) extended from the heat pump (9) to the heat exchanger (2), such that the heat obtained from the heat exchanger (2) is to a desired degree chargeable in the buffer accumulator (4) and respectively dischargeable from the buffer accumulator (4) to the heat pump (9), whereby the fluctuations of a thermal stress received from the heat source (1) and/or those of a heat release temperature can be equalized for upgrading the heat pump's (9) operation.

## Description

The invention relates to an arrangement for upgrading heat recovery and equalizing thermal effect in connection with a heat pump process, comprising a heat pump, a heat exchanger set in communication with a heat source for recovering heat, as well as a heat carrier circuit provided between the heat exchanger and the heat pump.

The engagement of a heat pump process with a heat-releasing heat source requires that the temperature of a heat carrier delivered to the vaporizer section of a heat pump be maintained within a given temperature range defined for the heat pump. Accordingly, heat sources particularly useful in terms of a heat pump process include those providing thermal energy as steadily as possible regarding both thermal stress and temperature.

Both industrial sector and also other activities in society involve a wealth of processes, providing heat which shows well-defined, possibly even cyclic fluctuations regarding both its quantity and temperature levels. One of such processes is a composting process for decomposing organic waste materials. This process, which is also an environmentally preferred way of decomposing garbage, is based on microbiological combustion.

When using a composter drum type of composting appliance, its drum element if rotated at given cycles for a speedier decomposition process and more equal process conditions for stock. Organic matter is thereby agitated in the drum and the warmed-up matter finds its way to the stock surface for a contact with air richer in oxygen. Upon cooling, the matter delivers heat to the air passed through the composter. As a result, the temperature of moist air leaving the composter may vary as much as within the range of +10°C to +60°C.

This type of heat source, for example, has a typical problem that both the heating effect obtained therefrom and the temperature level of releasing thermal energy fluctuate in a highly cyclic manner. In connection with a heat pump process, in particular, such fluctuation has an adverse effect and may even incapacitate the use of a heat pump. If temperature in the vaporizer of a heat pump becomes unduly high, the pressure shall also become excessive, especially downstream of the compressor. Respectively, an unduly low temperature results in an unduly low pressure and temperature level in the condenser section of a heat pump. In the process of providing a heat pump for any operating environment, the pump is designed for optimal operation at precisely defined temperature levels. If these levels are ignored, the efficiency of a heat pump will be impaired and, thus, the consumption of energy increases with respect to the quantity of recovered thermal energy. In addition, excessive variations in process characteristics are stressful for a heat pump mechanism, thus affecting its service life.

It is an intention of the present invention to overcome the above problems. In order to accomplish said undertaking, an arrangement of the present invention is characterized by what is set forth in the characterizing clause of the first claim. Another object of the invention is a respective method, which is characterized by what is set forth in the characterizing clause of claim 9.

Preferred embodiments of the present invention are presented in the dependent claims.

The invention will now be described in more detail with reference to the accompanying drawing, in which:
- Fig. 1: shows diagrammatically a conventional connection for a heat pump to a heat source,
- Fig. 2: shows an exemplary implementation for one arrangement of the invention,
- Fig. 3: shows a further embodiment for one arrangement of the invention.

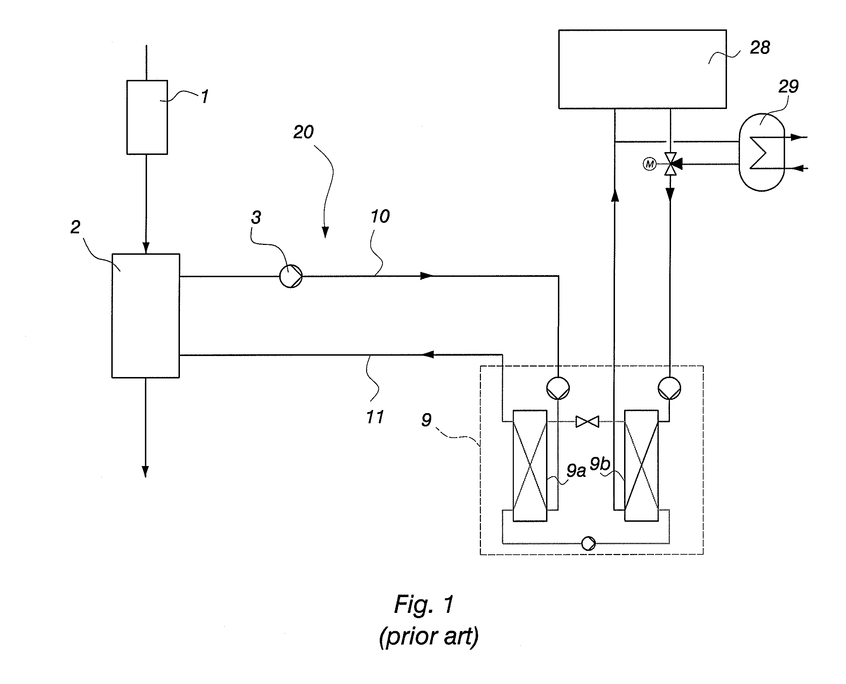

In a conventional heat pump circuitry shown in fig. 1, a heat source 1 comprises a composter drum, wherein heat is generated with organic matter burning as a result of microbiological activity. The warm moist air from the composter is guided to pass through a heat exchanger 2. The air cools and its moisture content condenses, thus releasing heat in the heat exchanger 2. Heat is transmitted by way of a heat carrier circuit 20 to a heat pump 9, by means of which the heat, at its raised temperature level, is delivered further to consumer applications 29, heating systems 28 or the like.

The cycle for fluctuations taking place in the delivery of heat by a composter is 1-2,5 hours, depending on the frequency applied for the composter's rotation. As a result of agitating organic matter by rotating the drum, the matter is brought more consistently to contact with more oxygen-rich air, thereby also equalizing temperature differences present in the matter.

The fluctuations both in thermal stress and temperature levels appearing in the heat exchanger 2 have, in the circuitry of fig. 1, a direct effect on the heat pump's 9 operation. The air coming out of the composter has its temperature varying within the range of +10°C to +60°C. Such fluctuations in operating conditions are unacceptable in terms of a heat pump's effective performance. Especially, an excessively high pressure in the vaporizer applies a high stress to the compressor and, respectively, when temperature remains unduly low, a low pressure downstream of the compressor, and thus a low condensing temperature, impedes the exploitation of heat in the heat pump's 9 condenser.

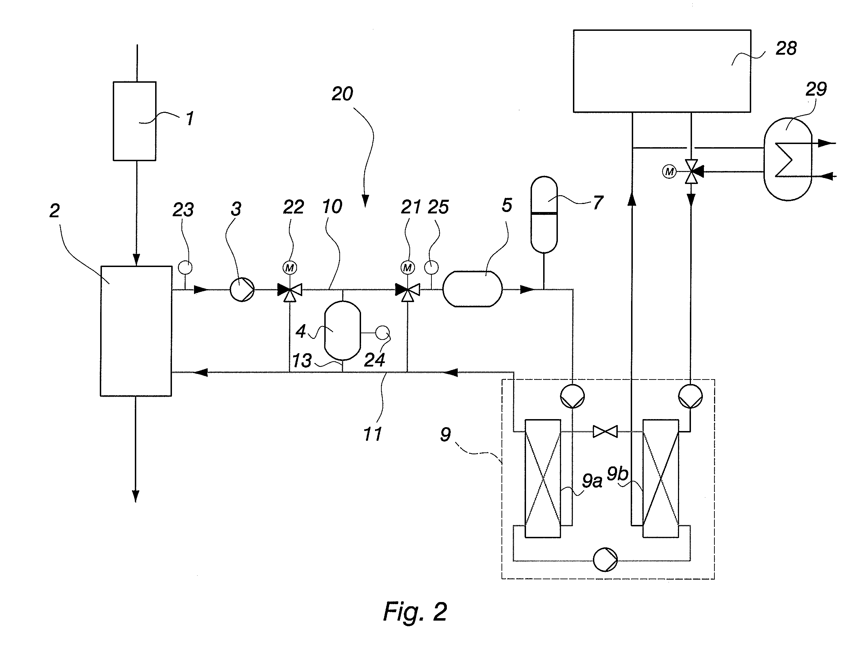

In the inventive arrangement shown in fig. 2, major temperature fluctuations have been eliminated by further providing the heat carrier circuit with elements, whereby thermal energy obtained from the heat exchanger 2 can be temporarily stored for subsequent use. This serves to equalize a thermal stress applied to the heat pump and to eliminate excessive temperature variations. In practice, this can be implemented for example by providing a buffer accumulator 4 in the heat transfer circuit between an outgoing line 10 and a return line 11, whereby the flow of a heat carrier can be guided to pass partially or, if necessary, even entirely through the buffer accumulator 4. In the inventive embodiment of fig. 2, the buffer accumulator 4 is in engagement with a flow line 13 connecting the outgoing line 10 and the return line 11.

Furthermore, in view of regulating the flow of a heat carrier, the outgoing line 10 is provided on either side of the line 13 with control elements 21 and 22, such as for example three-way valves. The valves can be used for regulating the flow rates of a heat carrier to the accumulator 4 and to the heat pump 9. If necessary, the heat carrier can be guided, for example, to pass along just either one of the lines. The valves can be preferably made self-operating for controlling the heat carrier flow independently on the basis of measured temperatures.

In the illustrated working example, temperature is measured from the outgoing line 10 immediately downstream of the heat exchanger 2 at a measuring point 23, as well as downstream of the valve 21 at a measuring point 25. In addition, the accumulator has in its immediate vicinity also a temperature measurement 24. A communication is established for a measuring signal from the measuring points to control elements (not shown) for the regulation of flow rates.

If temperature at the measuring point 25 rises above a target value set for a stream flowing to the heat pump 9, the valve 21 functions to mix the stream to a desired degree with a return stream flowing back from the heat pump. This is to ensure that temperature, and thereby also pressure, in the heat pump's 9 coolant circuit does not become unduly high. In this present exemplary embodiment of the invention, the heat carrier circuit's maximum temperature at the measuring point 25 has its value set at +20°C and its target value is set at +17°C. In this case, on the other hand, the heat pump's coolant circuit has its target temperature selected at - 7°C in the vaporizer.

The buffer accumulator's 4 temperature does not require any set maximum value. The accumulator 4 can be charged whenever the heating effect available from the heat exchanger 2 exceeds the heating effect required in the heat pump's 9 vaporizer. In this case, the flow coming from the heat exchanger 2 along the outgoing line 10 can be guided to pass through both the heat pump 9 and the accumulator 4. If temperature falls at the measuring point 23 below the accumulator's temperature 24, the portion of overall flow, which is not needed in the heat pump, can be guided by means of the valve 22 directly back into the return line 11 and further to the heat exchanger 2. Charging of the accumulator 4 can be picked up again once the heat carrier returning from the heat exchanger has its temperature in the outgoing line exceeding the accumulator's temperature.

Respectively, when the heating effect obtained from the heat exchanger 2 falls below the effect required in the heat pump's vaporizer or the temperature level falls unduly low, the flow in the heat carrier circuit can be guided to pass to the heat pump through the accumulator 4, as desired. Temperature in the outgoing line 10 can be adjusted also in this case by using the valve 21 for mixing some of the warm heat carrier discharged from the accumulator with a return flow coming from the heat pump along the return line 11 for attaining a desired target temperature. The line 11 can be further provided with an equalizing tank 5 for correcting a hysteresis of the valve 21.

In terms of instrumentation, the inventive arrangement can be implemented with highly conventional constructions. The accumulator 4, functioning as a buffer storage for heat, may comprise prior art accumulator tanks or other applicable accumulator elements intended for storing heat. In the presently discussed case, the buffer accumulator has a reported capacity of about 1400 L, the heat pump having an output in the order of 5 kW. The applied pressure in the heat carrier circuit is conventional 1-1,5 bars and a suitable heat carrier is for example a highly conventional 20% glycol-to-water mixture. Water alone is also acceptable, provided that temperature is always maintained above +0°C. The heat exchanger structure can be preferably made by using for example a pipe laminate. A structure like this is easy to wash, for example by means of a high-pressure cleaner.

Naturally, the exemplary embodiment presented in fig. 2 is not the only feasible solution for an arrangement of the invention. For example, instead of the three-way valves 21 and 22 shown in fig. 2, the control elements may comprise two-way valves or similar devices intended for regulating a flow rate, which can be installed as necessary even in every flow line included in the heat carrier circuit 20. Likewise, the line 13 can be designed for example as a branch of the outgoing line 10, which downstream of the buffer accumulator 4 is also provided with a line for the return line 11.

The accumulator tank 4 can also be arranged between the outgoing line 10 and the return line in such a way that the accumulator 4 is chargeable with a warmed-up heat carrier and dischargeable of the heat carrier.

It is also obvious that the recovery of heat from the heat source 1 as such can also be effected within the heat source 1 itself. In the case of a composter, for example, a heat exchanger can be provided in an appropriate way also inside the composter unit.

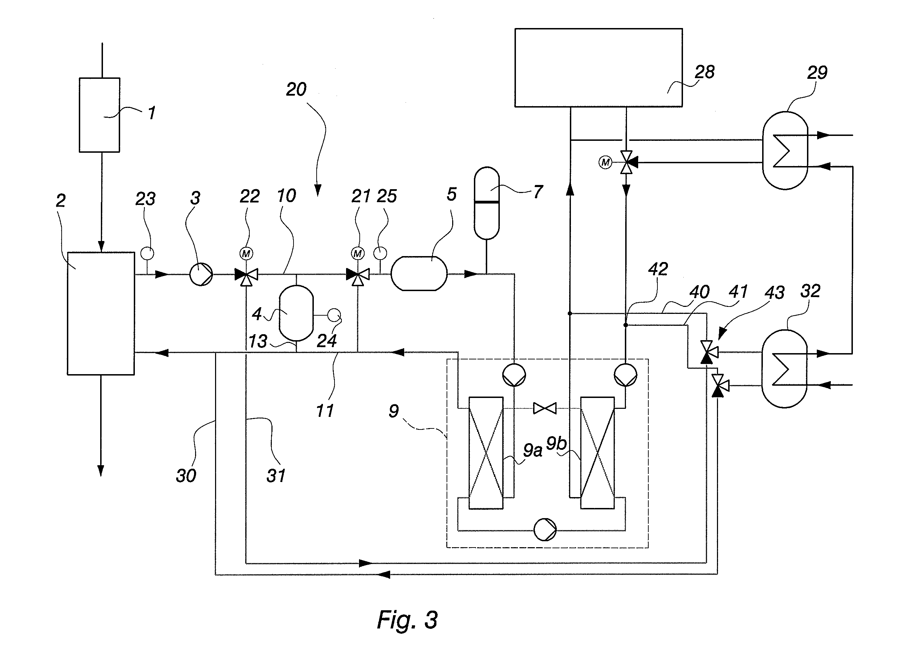

According to the circuitry shown in fig. 3, it is also conceivable that the heat transfer circuit 1 be further provided with connections 30, 31 for controlling the heat pump 9, in which case the heat obtained from the heat exchanger 2 can be exploited directly in other consumer applications or, for example, in a preheating process 32.

Also designated in fig. 3 are lines and connections 40, 41 and 42, as well as appropriate control elements 43, whereby the heat obtained from the heat exchanger 2 can be further guided either directly to consumer applications 28 as such or by way of heat exchangers (not shown). This is feasible, provided that the heat obtained from a heat source has a temperature level which is sufficiently high and there is no need for the heat pump process 9. Likewise, if the accumulator 4 is charged to its full capacity, the extra heat is exploitable, by circumventing the heat pump process 9, directly in heat consuming applications 28 or preheating purposes 32 as desired. It is also conceivable that some of the heat charged in the accumulator 4 is guided directly to consumer applications even when no heat is available from the heat source 1, i.e. using solely the heat stored in the accumulator 4.

Thus, the heat source described in the foregoing exemplary embodiments comprises a composter intended for the decomposition of organic materials. Naturally, the present invention is not limited just to composters, but the described arrangement can be exploited in connection with highly diversified heat sources. This is decidedly one of the benefits offered by an arrangement of the invention. The inventive arrangement is particularly beneficial in those very occasions when distinctive fluctuations occur in the heat obtained from a heat source, regarding both its quantity as well as its temperature levels. These include, for example, a multitude of cyclic industrial processes. It should further be emphasized that the physical state of a matter releasing heat in a heat source bears no crucial significance. It may just as well be in a gaseous, liquid, as well as in a solid state or in any combination thereof.

## Claims

1. An arrangement for upgrading heat recovery and equalizing thermal effect in connection with a heat pump process, comprising a heat pump (9), at least one heat exchanger (2) set in communication with a heat source (1) for recovering heat, a heat carrier circuit (20) provided between the heat exchanger (2) and the heat pump (9), **characterized in that** the heat carrier circuit (20) is further provided with at least one buffer accumulator (4) for storing thermal energy, said buffer accumulator (4) being engaged with the heat carrier circuit (20) for connecting an outgoing line (10) extended from the heat exchanger (2) to the heat pump (9) and a return line (11) extended from the heat pump (9) to the heat exchanger (2), such that the heat obtained from the heat exchanger (2) is to a desired degree chargeable in the buffer accumulator (4) and respectively dischargeable from the buffer accumulator (4) to the heat pump (9), whereby the fluctuations of a thermal stress received from the heat source (1) and/or those of a heat release temperature can be equalized for upgrading the heat pump's (9) operation.

2. An arrangement as set forth in claim 1, **characterized in that** there are further provided control elements (21, 22) capable of controlling the flow of a heat carrier as desired between the heat exchanger (2), the accumulator (4) and the heat pump (9).

3. An arrangement as set forth in claim 1 or 2, **characterized in that** the heat carrier is controllable to flow solely between the accumulator (4) and the heat exchanger (2).

4. An arrangement as set forth in any of claims 1-3, **characterized in that** the heat carrier is controllable to flow solely between the accumulator (4) and the heat pump (9).

5. An arrangement as set forth in any of claims 1-4, **characterized in that** the heat carrier circuit (20) is further provided with connections (30, 31) for controlling the heat pump (9), the heat obtained from the heat exchanger (2) being directly exploitable in other consumer applications (32, 28).

6. An arrangement as set forth in any of claims 1-5, **characterized in that** the heat source (1) comprises a process or an appliance releasing heat in a fluctuating manner, especially in cycles.

7. An arrangement as set forth in any of claims 1-6, **characterized in that** the heat source (1) comprises a composter unit.

8. An arrangement as set forth in claim 7, **characterized in that** the composter unit comprises a composter drum.

9. A method for upgrading heat recovery and equalizing thermal effect in connection with a heat pump process, comprising a heat pump (9), at least one heat exchanger (2) set in communication with a heat source (1) for recovering heat, a heat carrier circuit (20) provided between the heat exchanger (2) and the heat pump (9), **characterized in that** the heat carrier circuit (20) makes use of at least one accumulator tank (4) for storing thermal energy, said accumulator tank (4) being engaged with the heat carrier circuit (20) for connecting an outgoing line (10) extended from the heat exchanger (2) to the heat pump (9) and a return line (11) extended from the heat pump (9) to the heat exchanger (2), such that the heat obtained from the heat exchanger (2) is to a desired degree chargeable in the buffer accumulator (4) and respectively dischargeable from the buffer accumulator (4) to the heat pump (9), whereby the fluctuations of a thermal stress received from the heat source (1) and/or those of a heat release temperature can be equalized for upgrading the heat pump's (9) operation.
